# EUROPEAN PATENT SPECIFICATION

(11) **EP 2 016 298 B1**
(45) Date of publication and mention of the grant of the patent: **28.08.2013**
(21) Application number: 07724553.8
(22) Date of filing: 25.04.2007
(51) Int. Cl.: F16B 37/06

(54) **PIERCE NUT AND USE THEREOF**
STANZMUTTER UND VERWENDUNG DAFÜR
ÉCROU PERFORANT ET SON UTILISATION

(30) Priority: 25.04.2006 SE 0600917
(43) Date of publication of application: 21.01.2009
(73) Proprietor: Strömsholmen AB, 573 23 Tranas (SE)
(72) Inventor: GÄRDSTAM, Johannes, S-169 50 Solna (SE)
(74) Representative: Bokinge, Ole
(86) International application number: PCT/EP2007/003623
(87) International publication number: WO 2007/121998

(56) References cited:
- US-A- 5 502 888
- US-A1- 2005 103 086
- US-B2- 6 986 629

## Description

### Technical Field

The present invention relates to a pierce nut and to the use of such a pierce nut. More specifically, the document concerns a pierce nut that is particularly suited for high-strength sheet metal.

### Technical Background

Pierce nuts have been used in mass production applications for many years. In the automotive industry, they are used to allow the mounting of components in metal sheets and panels. In general, to attach these components threaded screws or bolts are used, and the joint can be tightened by means of a torque wrench.

Previously, there was a general tendency in the automotive industry to use thin metal sheets and panels to reduce the weight of the vehicles. Thus, focus was on the development of pierce nuts designed to provide high torque resistance and pull-through resistance, also when used with very thin sheets.

The latest trend in the automotive industry is toward an extended use of high-strength sheet metal. By optimizing each individual component of a vehicle with respect to its intended function, it is possible to reduce the weight and the impact on the environment and also to improve vehicle safety. Thus it is necessary to have pierce nuts designed to provide even higher torque resistance and pull-through resistance, requirements that cannot be satisfied by existing nuts. Other affected parameters whose importance increases are punching force, tool damage and nut centering; as the strength of the punched metal sheet increases, greater punching force is required, which increases the load on the punching tools as well as the risk of alignment errors occurring between the pierce nut and the punching die, thereby increasing the risk of tool damage.

Pierce nuts should be attached to the metal sheet in such manner that they resist both pull-through forces and torque.

US Pat. No. 5,340,251, the disclosure of which is incorporated by reference herein, proposes a pierce nut for attachment to a plastically deformable metal sheet, comprising an engagement side for engaging the metal sheet and a pilot extending from the engagement side in the direction away from the engagement side, which pilot has an end surface that faces away from the engagement side, and a first undercut portion facing away from the pilot and having a wall surface surrounding the end face. Moreover, the pierce nut has a second undercut portion oriented towards the pilot, and a groove located between the two undercut portions. When using the pierce nut disclosed in US 5,340,251, the sheet is plastically deformed and pressed into the groove and beneath the two undercut portions, thereby to achieve a form-fit interlock between the nut and metal sheet. The pierce nut disclosed in US 5,340,251 requires substantial deformation of the metal sheet to push it under the undercut portions, which in connection with high-strength sheet metal increases the stress on the pilot of the pierce nut, necessitates great punching force and, thus, increases wear also on the punching die. In addition, when using the pierce nut according to US 5,340,251, a thin section is obtained between the punching die and the engagement side of the nut, which section is susceptible to fatigue failure.

In European Patent No. 0 554 599 B1, the disclosure of which is incorporated by reference herein, a pierce nut for attachment to a plastically deformable metal sheet is disclosed which comprises an engagement side for engaging the metal sheet and a pilot extending from the engagement side in the direction away from the engagement side, which pilot has an end surface that is facing away from the engagement side and a wall surface surrounding the end surface. The pierce nut further has an undercut portion oriented towards the pilot, and a groove located between the pilot and the undercut portion. When using the pierce nut according to EP 0 554 559 B1 for punching high-strength sheet metal, an insufficient amount of sheet metal is pushed into the groove and beneath the undercut portion, which results in a joint with low pull-through strength. In addition, greater punching force is required to deform the metal sheet, which may cause damage to the punching die. Furthermore, the pierce nut disclosed in EP 0 554 599 B1 is susceptible to alignment errors between the pierce nut and the punching die, which may result in the pierce nut threads being damaged or their mechanical properties becoming irregular.

German Patent No. DE 2004 017 866 A1, the disclosure of which is incorporated by reference herein, discloses a pierce nut.

Further examples of pierce nuts are shown in DE 103 48 851 A1, US 2005/010186046 A1, US 6,986,629 B2, US 2005/0147481 A1 and JP 64-58807, the disclosures of which are incorporated by reference herein.

There is need for an improved pierce nut, which eliminates or reduces the problems discussed above.

### SUMMARY OF THE INVENTION

An object is therefore to provide a pierce nut that eliminates or reduces the problems associated with prior art pierce nuts.

A pierce nut according to the appended independent claims achieves the object entirely or in part.

It is thus provided a pierce nut for attachment to a plastically deformable metal sheet, the pierce nut comprising an abutment surface adapted to abut against the metal sheet, an undercut pilot protruding relatively to the abutment surface, and a countersunk groove which is formed in the abutment surface and at least partly surrounds the pilot, the groove being without active undercuts oriented towards the pilot. The groove comprises an inner groove and an outer groove and a ridge located there-between. The outer groove is at least partially defined by a surface portion, which faces a wall surface surrounding the pilot and away from the pierce nut.

The abutment surface is a surface adapted to abut against the metal sheet, essentially without penetrating the sheet.

The limiting surfaces of the groove are facing obliquely away from the pierce nut, i.e. at an angle to the metal sheet, in such manner that none of them form an undercut portion.

By using a pierce nut without an undercut portion in the groove, the deformation of the sheet is reduced, which results in an increased strength of the joint formed by the pierce nut and the sheet, while at the same time the ridge helps pushing sheet material towards the undercut pilot, thereby achieving a form-fit interlock between the nut and metal sheet.

A first angle between an end surface of the pilot and a wall surface surrounding said pilot may be 79 ± 1 degrees.

This angle has been found to be optimal for making the pierce nut work with high-strength sheet metal, but also with standard sheet metal.

The inner groove may be defined by a first surface portion, which, when viewed in a sectional plane through the centre of the pierce nut and perpendicularly to an end surface of the pilot, has essentially the same angle to the end surface as a wall surface surrounding the pilot.

The inner groove may be defined by a second surface portion, which is oriented towards the pilot and which, when viewed in a sectional plane through the centre of the pilot and perpendicularly to an end surface of the pilot, exhibits a second angle to the end surface, which second angle may be about 35-55 degrees, about 40-50 degrees, or about 45 degrees.

The inner groove may be defined by a third surface portion, which extends between said first and said second surface portions.

The outer groove may be defined by a fourth surface portion, which faces away from a wall surface surrounding the pilot and which, when viewed in a sectional plane through the centre of the pilot and perpendicularly to an end surface of the pilot, exhibits a third angle to the end surface, which third angle is about 15 degrees to about 45 degrees.

The surface portion, which faces the wall surface surrounding the pilot and thus defines the outer groove, may be a fifth surface portion, which, when viewed in a sectional plane through the centre of the pilot and perpendicularly to an end surface of the pilot, exhibits a fourth angle to the end surface, which fourth angle is about 10 degrees to about 70 degrees.

In another embodiment, the fourth angle may be about 30 to about 45 degrees.

The outer groove may be defined by a sixth surface portion, which extends between said fourth and fifth surface portions.

At least one of said first, second, fourth and fifth surface portions may be such as to exhibit a straight line that extends through said sectional plane. Thus, when viewed in cross-section, the surface portion may be plane.

Said straight line may, in said sectional plane, extend through essentially the whole surface portion concerned.

Said second and fourth surface portions may, when viewed in said sectional plane, form an angle with one another.

The groove may surround the pilot and may be essentially annular. The pilot too may be essentially annular.

The pilot and the groove may be essentially concentric.

The ridge may have an edge.

An edge of this kind allows optimal guidance of the metal sheet into the inner groove and the outer groove. The edge may be relatively pointed.

The edge may have a diameter that is 1.45 ± 0.1 mm larger than a maximum diameter of the pilot.

A smallest distance between a plane containing an end surface of the pierce nut and the edge may be greater than or equal to a smallest distance between said plane containing the end surface and an abutment surface adapted to abut against the metal sheet to which the pierce nut is designed to be attached.

Said smallest distance between the plane containing the end surface and the edge may be about 0.67 to about 1.14 times a thickness of the metal sheet to which the pierce nut is designed to be attached, and in some embodiments about 0.8 mm, for pierce nuts designed for use with metal sheets with a thickness of about 0.7 mm to about 1.2 mm.

Thus, a pierce nut that is optimized for thin high-strength metal sheets is achieved.

Said smallest distance between the plane containing the end surface and the edge may be about 0.75 to about 0.92 times a thickness of the metal sheet to which the pierce nut is designed to be attached, and in some embodiments about 1.2 mm, for pierce nuts designed for use with metal sheets with a thickness of about 1.3 mm to about 1.6 mm.

Thus, a pierce nut that is optimized for thick high-strength metal sheets is achieved.

The pierce nut may further comprise anti-rotation means.

Such anti-rotation means allow further improvement of the torque resistance of the pierce nut.

Anti-rotation means may comprise recesses and/or depressions in, for example, the groove, on/in the ridge located in the groove, on/in the wall surface surrounding the pilot, on/in the abutment surface or on/in the external wall.

The pierce nut may comprise an internally threaded portion. Such a pierce nut can be used to receive an externally threaded part, such as a screw or bolt.

Alternatively, the pierce nut may comprise an externally threaded portion. Such a pierce nut can be used to receive an internally threaded part, such as a nut.

According to a second aspect, a system is provided comprising a high-strength metal sheet and a pierce nut attached thereto by means of punching.

High-strength metal sheet here refers to metal sheets made of high-strength steel, i.e. steel with a tensile yield limit exceeding about 220 MPa, for example exceeding 290 MPa.

According to a third aspect, use of a pierce nut as described above is provided for attachment thereof to a high-strength metal sheet.

According to a fourth aspect, a method for mounting an attachment means in a high-strength metal sheet is provided, wherein said attachment means is a pierce nut as described above.

### Brief Description of the Drawings

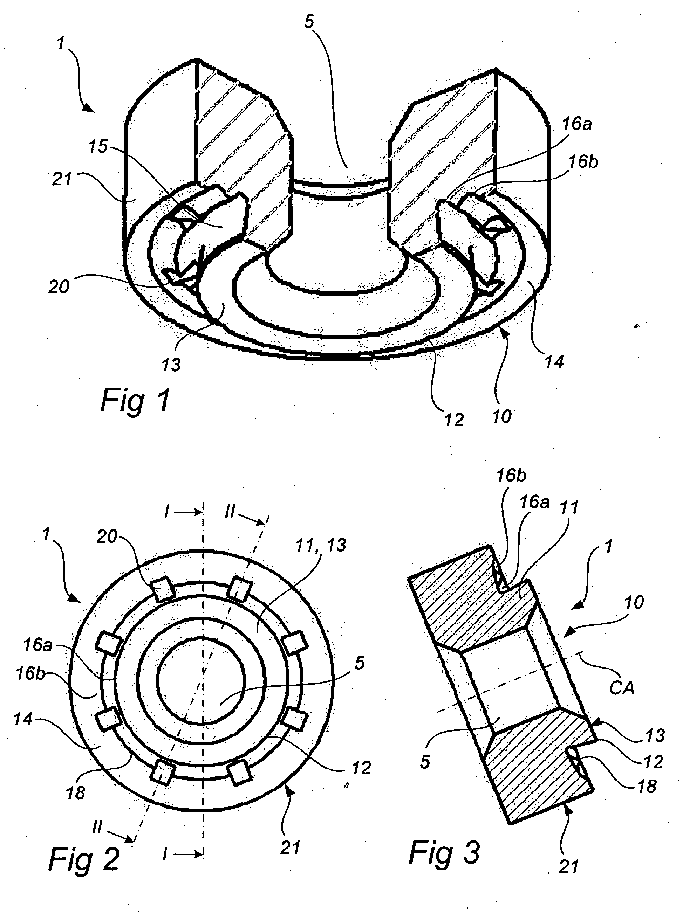

Fig. 1 is a perspective view of a pierce nut, a segment thereof having been removed.
Fig. 2 is a plan view of the engagement side of the pierce nut.
Fig. 3 is a sectional view of the pierce nut along the section II-II.

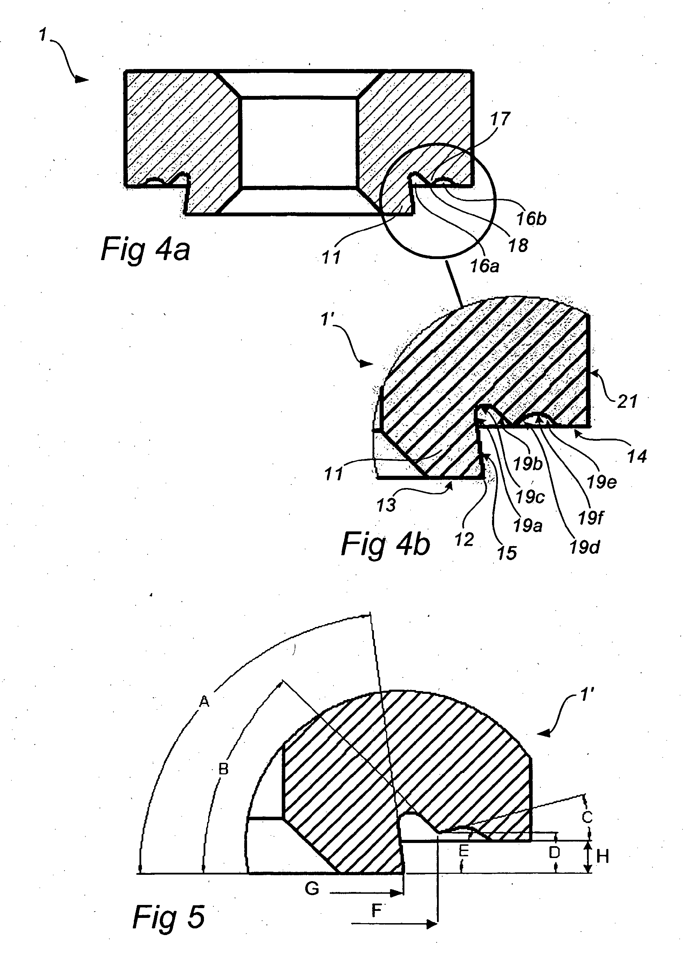

Figs 4a and 4b represent a sectional view along the section I-I of a pierce nut designed for great sheet thicknesses of, for example, about 1.3-1.6 mm, with a broken away enlarged detail thereof.
Fig. 5 is an enlarged sectional view along the section I-I, corresponding to that of fig. 4b, the angles and dimensions being indicated. The pierce nut shown in fig. 5 is designed for small sheet thicknesses of, for example, about 0.7-1.2 mm.
Fig. 6 shows the pierce nut with punching device and sheet before the engagement between the pierce nut and the sheet.
Fig. 7 shows the pierce nut with punching device and sheet in connection with the engagement between the pierce nut and the sheet.
Fig. 8 shows the pierce nut when mounted in the sheet.
Fig. 9 shows torque resistance-displacement graphs for high-strength sheet metal (Rp 0.2 = 350-450 MPa) with a sheet thickness of 1.45 mm.
Fig. 9b shows torque resistance-displacement graphs for conventional/high-strength sheet metal (Rp 0.2 = 260 MPa) with a sheet thickness of 1.45 mm.
Fig. 9c shows torque resistance-displacement graphs for extra high-strength sheet metal (Rp 0.2 = 500-650 MPa) with a sheet thickness of 1.5 mm.
Fig. 9d shows torque resistance-displacement graphs for conventional/high-strength sheet metal (Rp 0.2 = 260 MPa) with a sheet thickness of 1.45 mm.

### Description of Embodiments

The pierce nut 1 is designed so as to punch its own hole during the punching operation and to push sheet material into grooves, undercut etc. in the pierce nut during said operation.

Depending on the sheet thickness there are different optimized geometries.

The pierce nut 1 has a centered, threaded through hole 5. On the underside of the pierce nut, in the following referred to as the engagement side 10, a pilot 11 protrudes. The protrusion H of the pilot 11 relatively to the end surface 14 of the other portion on the engagement side 10 depends primarily on the sheet thickness. In the embodiment, the protrusion H is about 1.2 mm for sheet thicknesses up to about 1.3-1.6 mm and about 0.65 mm for sheet thicknesses up to about 0.7-1.2 mm.

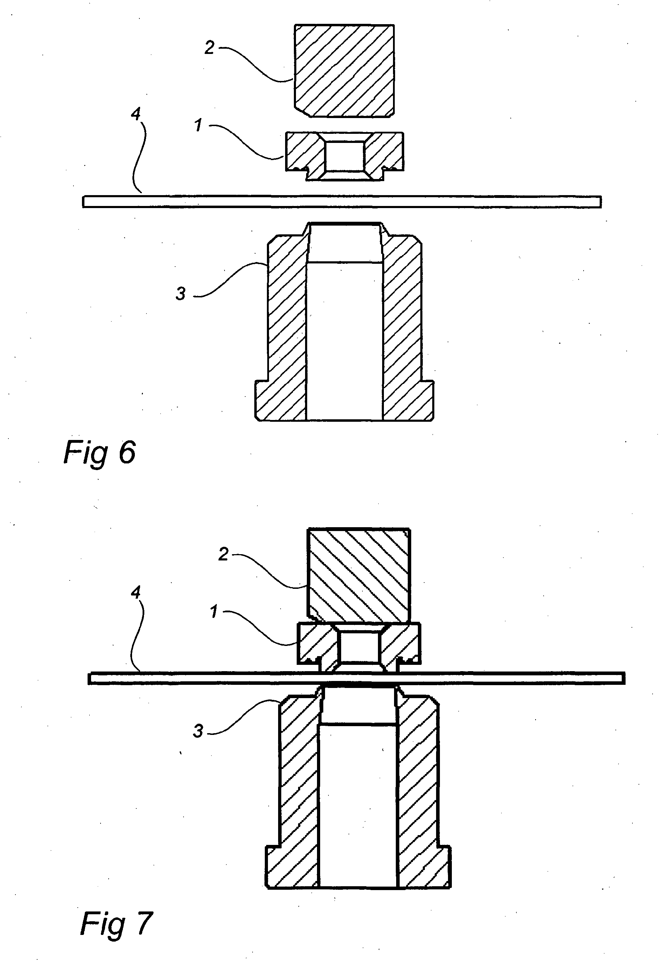

The pilot 11 has a plane, annular end surface 13 with a punching edge 12 which engages a sheet 4 and a punching die 3 during the actual punching (figs 6-8). Radially outside the pilot 11, an annular wall surface 15 is provided which is inclined inwards towards the radial centre CA of the nut and, thus, forms an undercut portion. The inclination (angle A) is adapted so that the wall engages the sheet across the entire surface during punching. It has been found that an angle A of about 79 ± 1° ensures an optimal result, in particular with respect to high-strength sheet metal, but also with respect to standard sheet metal.

Two annular grooves 16a, 16b are provided on the engagement side 10 of the pierce nut 1, between the external wall 21 of the pierce nut and the wall surface 15. The grooves 16a, 16b are shaped in such manner that there is a gap between them. Expressed differently, a ridge 17 is formed between the grooves 16a, 16b.

The first groove, the inner groove 16a, is located closest to the wall surface 15 and comprises an arc-shaped bottom portion 19c, an inclined first surface portion 19a with essentially the same inclination (A) as the wall surface 15 of the pilot 11 and a second surface portion 19b which is inclined at an angle B of about 45° to the end surface 13. The inclination of the second end portion 19b is adapted so as to reduce the stress to which the pierce nut and the sheet are subjected during punching as the sheet is pushed into the groove 16a, 16b.

The second groove, the outer groove 16b, is located radially outside the inner groove and consists of an inclined fourth surface portion 19d, an arc-shaped bottom portion 19f and an inclined fifth surface portion 19e, with an inclination E relatively to the end surface 13. The purpose of this outer groove 16b is to reduce the punching force to make it easier for the sheet 4 to flow into the inner groove 16a.

For sheet thicknesses of about 1.3-1.6 mm, the fifth surface portion 19e may have an inclination E of about 45° and be perpendicular to the inclination C of the fourth surface portion 19d.

For sheet thicknesses of about 0.7-1.2 mm, the fourth surface portion 19d may have an inclination of 15° and the fifth surface portion 19e an inclination E of 31°.

In this way, an edge 18 is formed between the second surface portion 19b of the inner groove 16a and the fourth surface portion 19d of the outer groove. The edge may be pointed.

The function of the edge 18 is to guide the sheet above all into the inner groove 16a towards the external wall 15 of the pilot 11, but also into the outer groove 16b as the sheet is being deformed during the punching operation, so as to fix the pierce nut.

The inclined walls of the grooves can be adjusted to achieve this in an optimal manner.

The advantage of the pointed edge 18 is that essentially the same amount of punching force can be used for high-strength sheet metal as for conventional sheet metal to achieve the same degree of deformation in the sheet during punching.

Thus, a small sheet deformation with high pull-out and pull-through resistance is obtained.

To obtain the best result, the tip of the edge 18 should be positioned at a distance D from a plane including the pilot's end surface 13, which in the embodiment is about 1.2 mm for sheet thicknesses of about 1.3-1.6 mm and about 0.8 for sheet thicknesses of about 0.7-1.2 mm. The edge may also be located on a diameter F that is about 1.45 ± 0.1 mm larger than a maximum diameter G of the pilot 11, thereby to obtain the best possible outcome, i.e. a joint with high torque and pull-through resistance.

In the case of a pierce nut with a dimension M6, the diameter F may be, for example, about 10.9 mm for sheet thicknesses of about 0.7-1.2 mm and about 11 mm for sheet thicknesses of about 1.3-1.6 mm.

To further improve the torque resistance of the pierce nut and prevent it from rotating relatively to the metal sheet, a plurality of recesses 20 may be provided on the engagement side of the pierce nut 1. The recesses 20 may be arranged at essentially the same radial distance from the centre CA of the pierce nut and distributed around the pilot 11. In the embodiments shown in the drawings, the recesses 20 are located in the groove 16a, 16b and are evenly distributed along the edge 18. The recesses may also be located in the ridge 17, in such manner that the ridge has a plurality of segments arranged around the pilot.

Alternatively, anti-rotation means can be arranged in the form of recesses or protrusions in any of the surfaces shown, for example the wall surface 15, the surfaces 19a, 19b, 19c, 19d, 19e, 19f in the grooves 16a, 16b, on the ridge 17, in the abutment surface 14 or in the external wall 21.

Such anti-rotation means allow form-fit locking of the pierce nut to be achieved when the sheet is pushed into the grooves 16a, 16b. During punching, the sheet is pressed against the edge 18 between the two annular grooves 16a, 16b. The edge 18 guides the sheet into the grooves 16a, 16b and the sheet is pushed towards the wall surface 15 of the pilot 11 and forms the geometrical lock by engaging the undercut portion. The pierce nut is thus retained in its position both by the form-fit locking and by frictional forces.

To improve the punching of high-strength sheet metal and allow the compensation of alignment errors occurring between the pierce nut and the punching die, the size of the pilot's end surface 13 may be increased compared with conventional pilots. The result is a more stable process and better protection for the thread in the case of an alignment error between the pierce nut and the punching die.

Owing to the design of the pierce nut described above, high torque resistance and pull-through resistance are maintained in the joint between the nut and sheet, also in the case of repeated disassembly and assembly of parts that engage the pierce nut.

The form-fit locking design of the pierce nut allows the dimensions to be reduced and a compact pierce nut geometry is obtained compared with conventional pierce nuts.

Figs 6-8 illustrate the punching operation using the pierce nuts 1 described above.

In fig. 6, the punch 2, the pierce nut 1, the sheet 4 and the punching die 3 are positioned at a distance from one another.

Fig. 7 illustrates the punching operation at the moment when a punching engagement between the pierce nut and the sheet is initiated.

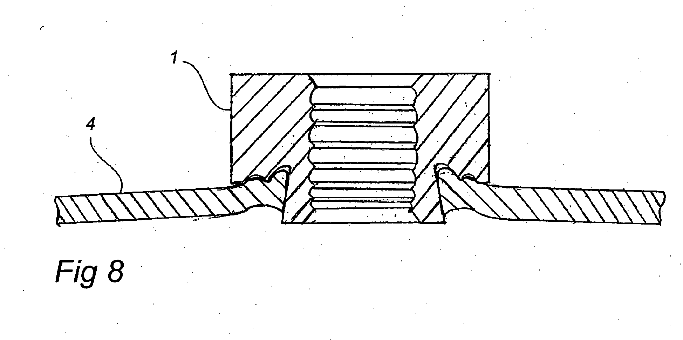

Fig. 8 shows how the pierce nut 1 has been attached to the sheet 4. It is worth noting how the sheet has been deformed and flowed into the grooves and is retained in its position by the undercut portion formed by pilot 11 and its wall surface 15.

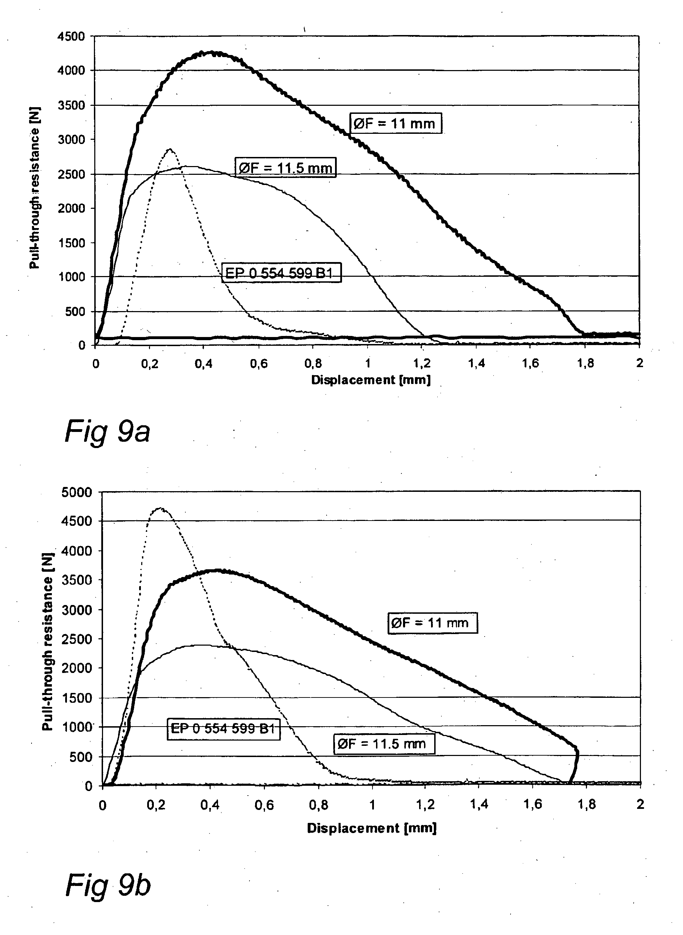

Figs 9a-9d display the results of measurements of pull-through resistance (push out force) and displacement of the nut-and-sheet joint.

Fig. 9a illustrates pull-through resistance-displacement graphs for high-strength sheet metal (Rp 0.2 = 350-450 MPa) with a sheet thickness of 1.45 mm, In fig. 9a, a conventional M6 pierce nut, such as the one shown in EP 0 554 599 B1, is compared with M6 pierce nuts designed according to the present document. It appears from fig. 9a that a diameter F of 11 mm offers a considerable improvement over a diameter F of 11.5 mm. It also appears from the graph that both pierce nuts according to the present document offer improvements over the conventional pierce nut. The pierce nut with a diameter F of 11.5 mm withstands significantly greater displacement than the conventional pierce nut.

Fig. 9b shows pull-trough resistance-displacement graphs for conventional/high-strength sheet metal (Rp 0.2 = 260 MPa) with a plate thickness of 1.45 mm. In fig. 9b, a conventional M6 pierce nut, such as the one shown in EP 0 554 599 B1, is compared with M6 pierce nuts designed according to the present document. For this sheet type too, a significant improvement in the ability of the pierce nut to withstand displacement is obtained. It is to be noted that, in this case too, a diameter F of 11 mm offers an improvement over a diameter of 11.5 mm.

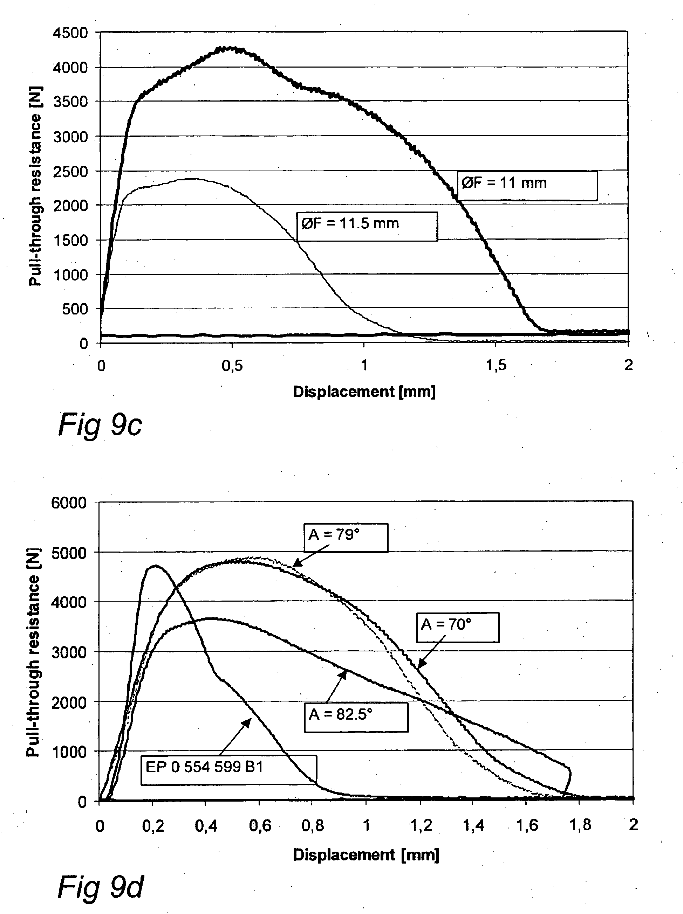

Fig. 9c shows pull-trough resistance-displacement graphs for extra high-strength sheet metal (Rp 0.2 = 500-650 MPa) with a sheet thickness of 1.5 mm. In fig. 9c, a comparison is made between two M6 pierce nuts designed according to the present document. As is shown in fig. 9c, a diameter F of 11 mm offers a major improvement over a diameter F of 11.5 mm.

Figs 9a-9c thus show that the diameter F is very important for the pull-through resistance of the pierce nut and its ability to withstand displacement, and thereby for optimizing the joint between pierce nut and sheet.

Fig. 9d shows pull-trough resistance-displacement graphs for conventional/high-strength sheet metal (Rp 0.2 = 260 MPa) with a sheet thickness of 1.45 mm. In fig. 9d three different M6 pierce nuts according to the present document are compared with a conventional pierce nut as described in EP 0 554 599 B1.

It can be noted that the pierce nuts according to the present document withstand significantly greater displacement than the conventional pierce nut. Moreover, it is noted that an angle A of 79 degrees offers the best combination of pull-through resistance and displacement. A reduction of A to 70 degrees has a smaller negative effect than an increase of A to 82.5 degrees.

It will be appreciated that the pierce nut 1 can be essentially circular, as shown in the appended drawings.

However, other geometrical shapes are conceivable. For example, it is easy to change the geometry of the pierce nut along the external wall 21, so as to give the pierce nut, for instance, an oval, elliptic or polygonal appearance (triangular, quadrangular, pentagonal etc.) instead of a round appearance.

The pilot's wall surface 15 and the grooves 16a, 16b too can be designed in non-circular manner according to the above, which designs can, but do not have to, coincide with the appearance of the external wall 21.

## Claims

1. A pierce nut (1) for attachment to a plastically deformable metal sheet (4), the pierce nut comprising:
an abutment surface (14) adapted to abut against the metal sheet (4),
an undercut pilot (11) protruding relative to the abutment surface (14), and
a countersunk groove (16a, 16b) which is formed in the abutment surface (14) and at least partly surrounds the pilot (11), **characterized in that** the groove (16a, 16b) is without active undercuts facing the pilot (11), the groove comprises an inner groove (16a) and an outer groove (16b) and a ridge (17) located therebetween, and the outer groove (16b) is at least partially defined by a surface portion (19e), which faces a wall surface (15) surrounding the pilot and away from the pierce nut.

2. The pierce nut (1) as defined in claim 1, wherein a first angle (A) between an end surface (13) of the pilot (11) and a wall surface (15) extending around the pilot is about 79 ± 10 degrees, about 79 ± 5 degrees or about 79 ± 1 degrees.

3. The pierce nut (1) as defined in claim 1 or 2, wherein the inner groove (16a) is defined by a first surface portion (19a), which, when viewed in a sectional plane (I-I) through the center (CA) of the pierce nut and perpendicularly to an end surface (13) of the pilot (11), exhibits essentially the same angle (A) to the end surface (13) as a wall surface (15) surrounding the pilot.

4. The pierce nut (1) as defined in any one of claims 1 to 3, wherein the inner groove (16a) is defined by a second surface portion (19b), which is oriented towards the pilot (11) and which, when viewed in a sectional plane (I-I) through the center (CA) of the pierce nut and perpendicularly to an end surface (13) of the pierce nut, exhibits a second angle (B) relatively to the end surface (13), which second angle (B) is about 35-55 degrees, generally about 40-50 degrees or about 45 degrees.

5. The pierce nut (1) as defined in claims 4, wherein the inner groove (16a) is defined by a third surface portion (19c), which extends between said first and second surface portions (19a, 19b).

6. The pierce nut (1) as defined in any one of claims 1 to 5, wherein the outer groove (16b) is defined by a fourth surface portion (19d), facing away from a wall surface (15) surrounding the pilot, which, when viewed in a sectional plane (I-I) through the center (CA) of the pierce nut and perpendicularly to an end surface (13) of the pierce nut, exhibits a third angle (B) to the end surface (13), which third angle (B) is between about 15 degrees and about 45 degrees.

7. The pierce nut (1) as defined in any one of claims 1 to 6, wherein the surface portion (19e), which faces the wall surface (15) surrounding the pilot and thus defines the outer groove (16b), is a fifth surface portion (19e), which, when viewed in a sectional plane (I-I) through the center (CA) of the pierce nut and perpendicularly to an end surface (13) of the pierce nut, exhibits a fourth angle (E) to the end surface (13), which fourth angle (E) Is between about 10 degrees and about 70 degrees.

8. The pierce nut (1) as defined in claim 6 in combination with claims 7, wherein the outer groove (16b) is defined by a sixth surface portion (19f), which extends between said fourth and fifth surface portions (19d, 19e).

9. The pierce nut (1) as defined in any one of claims 3 to 8, wherein at least one of said first, second, fourth and fifth surface portions (19a, 19b, 19d, 19e) is such as to exhibit a straight line extending through said sectional plane (I-I).

10. The pierce nut (1) as defined in claim 9, wherein said straight line, in said sectional plane (I-I) extends through essentially the whole surface portion concerned (19a, 19b, 19d, 19e).

11. The pierce nut (1) as defined in claims 6 to 10, wherein said second and fourth surface portions (19b, 19d), when viewed in said sectional plane (I-I), form an angle with one another.

12. The pierce nut (1) as defined in any one of the preceding claims, wherein the groove (16a, 16b) surrounds the pilot (11), the pilot (11) and the groove (16a, 16b) are essentially concentric.

13. The pierce nut (1) as defined in any one of the preceding claims, wherein the ridge (17) has an edge (18), and the edge (18) has a diameter (F) that is 1.45 mm ± 0.1 mm greater than a maximum diameter (G) of the pilot (11).

14. The pierce nut (1) as defined in claim 13, wherein a smallest distance (D) between a plane that contains an end surface (13) of the pierce nut and the edge (18) is greater than or equal to a smallest distance between said plane containing the end surface (13) and an abutment surface (14) adapted to abut against the metal sheet (4) to which the pierce nut (1) is designed to be attached.

15. The pierce nut (1) as defined in claim 14, wherein said smallest distance (D) between the plane that contains the end surface (13) and the edge (18) is between about 0.67 and about 1.14 times a thickness of the metal sheet (4) to which the pierce nut (1) is designed to be attached, for example about 0.8 mm, for pierce nuts designed for use with metal sheets with a thickness of about 0.7 mm to about 1.2 mm.

16. The pierce nut (1) as defined in 14, wherein said smallest distance (D) between the plane that contains the end surface (13) and the edge (18) is between about 0.75 and about 0.92 times a thickness of the metal sheet (4) to which the pierce nut (1) is designed to be attached, for example about 1.2 mm, for pierce nuts designed for use with metal sheets with a thickness of about 1.3 mm to about 1.6 mm.

17. The pierce nut (1) as defined in any one of the preceding claims, further comprising anti-rotation means (20), said anti-rotation means (20) are provided in the groove (16a, 16b).

18. The pierce nut (1) as defined in any one of the preceding claims, further comprising an internally threaded portion (5), or an externally threaded portion.

19. A method for mounting an attachment means in a high-strength metal sheet (4), wherein said attachment means is a pierce nut (1) according to any one of claims 1-18.

## Patentansprüche

1. Eine Stanzmutter (1) zum Anbringen an ein plastisch verformbares Metallblech (4), wobei die Stanzmutter aufweist:
eine Anlagefläche (14), welche geeignet ist, an dem Metallblech (4) anzuliegen,
einen Hinterschnittzapfen (11), der relativ zu der Anlagefläche (14) vorsteht, und
eine Senknut (16a, 16b), welche in der Anlagefläche (14) ausgebildet ist und welche zumindest teilweise den Zapfen (11) umgibt, **dadurch gekennzeichnet, dass** die Nut (16a, 16b) ohne aktive Hinterschnitte ausgebildet ist, welche in Richtung des Zapfens (11) gerichtet sind, wobei die Nut eine innere Nut (16a) und eine äußere Nut (16b) und einen Grat (17) aufweist, welcher dazwischen angeordnet ist, und wobei die äußere Nut (16b) zumindest teilweise durch einen Flächenbereich (19) definiert ist, welcher zu einer Wandfläche (15), die den Zapfen umgibt, und weg von der Stanzmutter gerichtet ist.

2. Die Stanzmutter (1) nach Anspruch 1, wobei ein erster Winkel (A) zwischen einer Endfläche (13) des Zapfens (11) und einer Wandfläche (15), welche sich um den Zapfen herum erstreckt, etwa 79±10°, etwa 79±5° oder etwa 79±1° ist.

3. Die Stanzmutter (1) nach Anspruch 1 oder 2, wobei die innere Nut (16a) durch einen erste Flächenbereich (19a) definiert ist, welcher, wenn er in einer Schnittebene (I-I) durch das Zentrum (CA) der Stanzmutter und senkrecht zu einer Endfläche (13) des Zapfens (11) betrachtet, im wesentlichen den gleichen Winkel (A) zu der Endfläche (13) zeigt wie eine Wandfläche (15), die den Zapfen umgibt.

4. Die Stanzmutter (1) nach einem der Ansprüche 1-3, wobei die innere Nut (16a) durch einen zweiten Flächenbereich (19b) definiert ist, welcher zu dem Zapfen (11) hin orientiert ist und welcher, wenn er in einer Schnittebene (I-I) durch das Zentrum (CA) der Stanzmutter und senkrecht zu einer Endfläche (13) der Stanzmutter gesehen wird, einen zweiten Winkel (B) relativ zu der Endfläche (13) zeigt, welcher zweiter Winkel (B) etwa 35-55° ist, im allgemeinen etwa 40-50° oder etwa 45° ist.

5. Die Stanzmutter (1) nach Anspruch 4, wobei die innere Nut (16a) durch einen dritten Flächenbereich (19c) definiert ist, welcher sich zwischen dem ersten und dem zweiten Flächenbereich (19a, 19b) erstreckt.

6. Die Stanzmutter (1) nach einem der Ansprüche 1-5, wobei die äußere Nut (16b) durch einen vierten Flächenbereich (19d) definiert ist, welcher von einer Wandfläche (15), die den Zapfen umgibt, weg gerichtet ist und welcher, wenn er in einer Schnittebene (I-I) durch das Zentrum (CA) der Stanzmutter und senkrecht zu einer Endfläche (13) der Stanzmutter gesehen wird, einen dritten Winkel (B) zu der Endfläche (13) zeigt, wobei der dritte Winkel (B) zwischen etwa 15° und etwa 45° ist.

7. Die Stanzmutter (1) nach einem der Ansprüche 1-6, wobei der Flächenbereich (19e), welcher zu der Wandfläche (15), die den Zapfen umgibt, hin gerichtet ist und damit die äußere Nut (16b) definiert, ein fünfter Flächenbereich (19) ist, welcher, wenn er in einer Schnittebene (I-I) durch das Zentrum (CA) der Stanzmutter und senkrecht zu einer Endfläche (13) der Stanzmutter gesehen wird, einen vierten Winkel (E) zu der Endfläche (13) zeigt, welcher vierter Winkel (E) zwischen etwa 10° und etwa 70° ist.

8. Die Stanzmutter (1) nach Anspruch 6 in Kombination mit Anspruch 7, wobei die äußere Nut (16b) durch einen sechsten Flächenbereich (19f) definiert ist, welcher sich zwischen dem vierten und dem fünften Flächenbereich (19d, 19e) erstreckt.

9. Die Stanzmutter (1) nach einem der Ansprüche 3-8, wobei zumindest einer des ersten, zweiten, vierten und fünften Flächenbereichs (19a, 19b, 19d, 19e) derart ausgebildet ist, dass er eine gerade Linie zeigt, die sich durch die Schnittebene (I - I) erstreckt.

10. Die Stanzmutter (1) nach Anspruch 9, wobei die gerade Linie in der Schnittebene (I-I) sich im wesentlichen durch den gesamten Flächenbereich (19a, 19b, 19d, 19e) erstreckt.

11. die Stanzmutter (1) nach einem der Ansprüche 6-10, wobei der zweite und der vierte Flächenbereich (19b, 19d) miteinander einen Winkel bilden, wenn sie in der Schnittebene (I-I) gesehen werden.

12. Die Stanzmutter (1) nach einem der vorangegangenen Ansprüche, wobei die Nut (16a, 16b) den Zapfen (11) umgibt, wobei der Zapfen (11) und die Nut (16a, 16b) im wesentlichen konzentrisch sind.

13. Die Stanzmutter (1) nach einem der vorangegangenen Ansprüche, wobei der Grad (17) einen Rand (18) aufweist und wobei der Rand (18) einen Durchmesser (F) hat, der 1,45 mm ± 0,1 mm größer als ein maximaler Durchmesser (G) des Zapfens (11) ist.

14. Die Stanzmutter (1) nach Anspruch 13, wobei ein geringster Abstand (D) zwischen einer Ebene, die eine Endfläche (13) der Stanzmutter umfasst, und dem Rand (18) größer oder gleich ist als ein geringster Abstand zwischen der Ebene, welche die Endfläche (13) umfasst, und einer Anlagefläche (14), welche geeignet ist gegen das Metallblech (4) anzuliegen, an welchem die Stanzmutter (1) geeignet ist angebracht zu werden.

15. Die Stanzmutter (1) nach Anspruch 14, wobei der geringste Abstand (D) zwischen der Ebene, welche die Endfläche (13) umfasst, und dem Rand (18) zwischen etwa 0,67 und etwa 1,14 mal einer Dicke des Metallblechs (4) ist, an welchem die Stanzmutter (1) geeignet ist angebracht zu werden, zum Beispiel etwa 0,8 mm für Stanzmuttern, die zur Verwendung mit Metallblechen mit einer Dicke von etwa 0,7 mm bis etwa 1,2 mm vorgesehen sind.

16. Die Stanzmutter (1) nach Anspruch 14, wobei der geringste Abstand (D) zwischen der Ebene, welche die Endfläche (13) umfasst, und dem Rand (18) zwischen etwa 0,75 und etwa 0,92 mal einer Dicke des Metallblechs (4) ist, an welchem die Stanzmutter (1) geeignet ist angebracht zu werden, zum Beispiel etwa 1,2 mm für Stanzmuttern, die zur Verwendung mit Metallblechen mit einer Dicke von etwa 1,3 mm bis etwa 1,6 mm vorgesehen sind.

17. Die Stanzmutter (1) nach einem der vorangegangenen Ansprüche, ferner Anti-Rotationsmittel (20) aufweisend, wobei die Anti-Rotationsmittel (20) in der Nut (16a, 16b) vorgesehen sind.

18. Die Stanzmutter (1) nach einem der vorangegangenen Ansprüche, ferner einen inneren Gewindebereich (5) oder einen externen Gewindebereich aufweisen.

19. Ein Verfahren zum Montieren eines Befestigungsmittels in einem hochfesten Metallblech (4), wobei das Befestigungsmittel eine Stanzmutter (1) gemäß einem der Ansprüche 1-18 ist.

## Revendications

1. Ecrou auto-poinçonneur (1) pour fixation à une feuille de métal déformable plastiquement (4), l'écrou auto-poinçonneur comprenant :
une surface de butée (14) adaptée pour buter contre la feuille de métal (4),
un pilote entaillé (11) protubérant par rapport à la surface de butée (14), et
une rainure fraisée (16a, 16b) qui est formée dans la surface de butée (14) et entoure au moins en partie le pilote (11), **caractérisé en ce que** la rainure (16a, 16b) est sans entaille active en regard du pilote (11), la rainure comprenant une rainure interne (16a) et une rainure externe (16b) et une arête (17) située entre elles, et la rainure externe (16b) est au moins partiellement définie par une portion de surface (19e), qui est en regard d'une surface de paroi (15) entourant le pilote et en éloignement de l'écrou auto-poinçonneur.

2. Ecrou auto-poinçonneur (1) selon la revendication 1, dans lequel un premier angle (A) entre une surface d'extrémité (13) du pilote (11) et une surface de paroi (15) s'étendant autour du pilote est d'environ 79 ± 10 degrés, d'environ 79 ± 5 degrés ou d'environ 79 ± 1 degrés.

3. Ecrou auto-poinçonneur (1) selon la revendication 1 ou 2, dans lequel la rainure interne (16a) est définie par une première portion de surface (19a) qui, vue dans un plan en coupe (I-I) passant par le centre (CA) de l'écrou auto-poinçonneur et perpendiculairement à une surface d'extrémité (13) du pilote (11), présente essentiellement le même angle (A) avec la surface d'extrémité (13) qu'une surface de paroi (15) entourant le pilote.

4. Ecrou auto-poinçonneur (1) selon l'une quelconque des revendications 1 à 3, dans lequel la rainure interne (16a) est définie par une deuxième portion de surface (19b), qui est orientée vers le pilote (11) et qui, vue dans un plan en coupe (I-I) passant par le centre (CA) de l'écrou auto-poinçonneur et perpendiculairement à une surface d'extrémité (13) de l'écrou auto-poinçonneur, présente un deuxième angle (B) par rapport à la surface d'extrémité (13), lequel deuxième angle (B) est d'environ 35 à 55 degrés, généralement d'environ 40 à 50 degrés ou d'environ 45 degrés.

5. Ecrou auto-poinçonneur (1) selon la revendication 4, dans lequel la rainure interne (16a) est définie par une troisième portion de surface (19c), qui s'étend entre lesdites première et deuxième portions de surface (19a, 19b).

6. Ecrou auto-poinçonneur (1) selon l'une quelconque des revendications 1 à 5, dans lequel la rainure externe (16b) est définie par une quatrième portion de surface (19d), en regard en éloignement d'une surface de paroi (15) entourant le pilote qui, vue dans un plan en coupe (I-I) en passant le centre (CA) de l'écrou auto-poinçonneur et perpendiculairement à une surface d'extrémité (13) de l'écrou auto-poinçonneur, présente un troisième angle (B) avec la surface d'extrémité (13), lequel troisième angle (B) est compris entre environ 15 degrés et environ 45 degrés.

7. Ecrou auto-poinçonneur (1) selon l'une quelconque des revendications 1 à 6, dans lequel la portion de surface (19e), qui est en regard de la surface de paroi (15) entourant le pilote et définit ainsi la rainure externe (16b), est une cinquième portion de surface (19e) qui, vue dans un plan en coupe (I-I) passant par le centre (CA) de l'écrou auto-poinçonneur et perpendiculairement à une surface d'extrémité (13) de l'écrou auto-poinçonneur, présente un quatrième angle (E) avec la surface d'extrémité (13), lequel quatrième angle (E) est compris entre environ 10 degrés et environ 70 degrés.

8. Ecrou auto-poinçonneur (1) selon la revendication 6 en combinaison avec la revendication 7, dans lequel la rainure externe (16b) est définie par une sixième portion de surface (19f), qui s'étend entre lesdites quatrième et cinquième portions de surface (19d, 19e).

9. Ecrou auto-poinçonneur (1) selon l'une quelconque des revendications 3 à 8, dans lequel au moins l'une desdites première, deuxième, quatrième et cinquième portions de surface (19a, 19b, 19d, 19e) est telle qu'elle présente une droite s'étendant à travers ledit plan en coupe (I-I).

10. Ecrou auto-poinçonneur (1) selon la revendication 9, dans lequel ladite droite, dans ledit plan en coupe (I-I), s'étend essentiellement à travers l'intégralité de la portion de surface (19a ; 19b, 19d, 19e) concernée.

11. Ecrou auto-poinçonneur (1) selon l'une quelconque des revendications 6 à 10, dans lequel lesdites deuxième et quatrième portions de surface (19b, 19d), vues dans ledit plan en coupe (I-I), forment un angle l'une avec l'autre.

12. Ecrou auto-poinçonneur (1) selon l'une quelconque des revendications précédentes, dans lequel la rainure (16a, 16b) entoure le pilote (11), le pilote (11) et la rainure (16a, 16b) étant essentiellement concentriques.

13. Ecrou auto-poinçonneur (1) selon l'une quelconque des revendications précédentes, dans lequel l'arête (17) comporte un bord (18), et le bord (18) a un diamètre (F) qui est plus grand de 1,45 mm ± 0,1 mm qu'un diamètre maximal (G) du pilote (11).

14. Ecrou auto-poinçonneur (1) selon la revendication 13, dans lequel une distance (D) la plus petite entre un plan qui contient une surface d'extrémité (13) de l'écrou auto-poinçonneur et le bord (18) est supérieure ou égale à une distance la plus petite entre ledit plan contenant la surface d'extrémité (13) et une surface de butée (14) adaptée pour buter contre la feuille de métal (4) à laquelle l'écrou auto-poinçonneur (1) est conçu pour être fixé.

15. Ecrou auto-poinçonneur (1) selon la revendication 14, dans lequel ladite distance (D) la plus petite entre le plan qui contient la surface d'extrémité (13) et le bord (18) est comprise entre environ 0,67 et environ 1,14 fois une épaisseur de la feuille de métal (4) à laquelle l'écrou auto-poinçonneur (1) est conçu pour être fixé, par exemple d'environ 0,8 mm, pour des écrous auto-poinçonneurs conçus pour une utilisation avec des feuilles de métal ayant une épaisseur d'environ 0,7 mm à environ 1,2 mm.

16. Ecrou auto-poinçonneur (1) selon la revendication 14, dans lequel ladite distance (D) la plus petite entre le plan qui contient la surface d'extrémité (13) et le bord (18) est comprise entre environ 0,75 et environ 0,92 fois une épaisseur de la feuille de métal (4) à laquelle l'écrou auto-poinçonneur (1) est conçu pour être fixé, par exemple d'environ 1,2 mm, pour des écrous auto-poinçonneurs conçus pour une utilisation avec des feuilles de métal ayant une épaisseur d'environ 1,3 mm à environ 1,6 mm.

17. Ecrou auto-poinçonneur (1) selon l'une quelconque des revendications précédentes, comprenant en outre des moyens anti-rotation (20), lesdits moyens anti-rotation (20) étant disposés dans la rainure (16a, 16b).

18. Ecrou auto-poinçonneur (1) selon l'une quelconque des revendications précédentes, comprenant en outre une portion filetée intérieurement (5) ou une portion filetée extérieurement.

19. Procédé de montage d'un moyen de fixation dans une feuille de métal à haute résistance (4), dans lequel ledit moyen de fixation est un écrou auto-poinçonneur (1) selon l'une quelconque des revendications 1 à 18.
